# EUROPÄISCHE PATENTSCHRIFT

(11) **EP 3 127 761 B1**
(45) Veröffentlichungstag und Bekanntmachung des Hinweises auf die Patenterteilung: **05.07.2017**
(21) Anmeldenummer: 15002288.7
(22) Anmeldetag: 01.08.2015
(51) Int. Cl.: B60R 22/415

(54) **GURTAUFROLLER FÜR EINEN FAHRZEUG-SICHERHEITSGURT**
BELT ROLLER FOR A VEHICLE SEATBELT
ENROULEUR DE CEINTURE POUR UNE CEINTURE DE SECURITE DE VEHICULE

(43) Veröffentlichungstag der Anmeldung: 08.02.2017
(73) Patentinhaber: TRW Automotive GmbH, 73553 Alfdorf (DE); TRW Polska Sp.z.o.o., 42-200 Czestochowa (PL)
(72) Erfinder: JURA, Jan, Czestochowa 42-200 (PL)
(74) Vertreter: Prehn, Manfred

(56) Entgegenhaltungen:
- EP-A1- 0 655 372
- EP-A1- 1 209 047
- DE-A1- 10 360 032
- US-A1- 2013 256 442

## Beschreibung

Die Erfindung betrifft einen Gurtaufroller für einen Fahrzeug-Sicherheitsgurt, mit einem Rahmen, einer Gurtspule, die drehbar im Rahmen gelagert ist, einem Blockiermechanismus, der zumindest gurtbandsensitiv ansprechen kann und eine Sperrscheibe aufweist, und einem Kindersicherungsmechanismus, der von einem Planetengetriebe gesteuert wird.

Mit dem Kindersicherungsmechanismus kann der Gurtaufroller in einen Zustand gebracht werden, in welchem der Sicherheitsgurt lediglich aufgewickelt, aber nicht mehr abgezogen werden kann. Dies ermöglicht es, beispielsweise einen Kindersitz zuverlässig im Fahrzeug zu fixieren. EP655372 A1 beschreibt einen Gurtaufroller gemäß dem Oberbegriff des Patentanspruchs 1. Der Kindersicherungsmechanismus wird üblicherweise dadurch aktiviert, dass das Gurtband vollständig von der Gurtspule abgezogen wird. Wird anschließend der Sicherheitsgurt auf die Gurtspule aufgewickelt, wirkt ein Sperrelement mit der Sperrscheibe nach Art einer Ratsche zusammen, sodass die Sperrscheibe relativ zum Sperrelement in der Aufwickelrichtung durchrutschen kann. Wird jedoch die Gurtspule in der Abwickelrichtung gedreht, hält das Sperrelement die Sperrscheibe fest, sodass es zu einer Relativdrehung zwischen der Sperrscheibe und der Gurtspule kommt. Hierdurch spricht der Blockiermechanismus der Gurtspule an, sodass kein Sicherheitsgurt mehr abgezogen werden kann.

Die Aufgabe der Erfindung besteht darin, den bekannten Gurtaufroller um weitere Funktionalitäten zu erweitern.

Zur Lösung dieser Aufgabe ist erfindungsgemäß bei einem Gurtaufroller der eingangs genannten Art ein Sensorruhigstellungsmechanismus vorgesehen, der ebenfalls vom Planetengetriebe gesteuert wird. Die Untersetzungswirkung des Planetengetriebes ermöglicht es, den Sensorruhigstellungsmechanismus mit geringem Aufwand in den Gurtaufroller zu integrieren.

Vorzugsweise ist vorgesehen, dass der Sensorruhigstellungsmechanismus eine Steuerscheibe aufweist, die über das Planetengetriebe mit der Gurtspule gekoppelt ist. Mit der Steuerscheibe lässt sich in einer sehr kompakten Weise die Funktion der Ruhigstellung des Sensors verwirklichen.

Vorzugsweise ist vorgesehen, dass das Planetengetriebe mindestens ein Planetenrad aufweist, mit dem die Steuerscheibe gekoppelt ist. Die Bewegung der Steuerscheibe kann dadurch unmittelbar vom Planetengetriebe gesteuert werden, ohne dass weitere Zwischenelemente nötig sind.

Vorzugsweise ist das Planetenrad ein Stufenrad mit einem ersten Zahnrad und einem zweiten Zahnrad, wobei sich die Anzahl der Zähne der beiden Zahnräder voneinander unterscheidet. Aufgrund des Unterschiedes in der Anzahl der Zähne des ersten Zahnrades und des zweiten Zahnrades lässt sich ein sehr starkes Untersetzungsverhältnis erzielen, sodass die Steuerscheibe zwischen einem Zustand mit vollständig aufgewickeltem Gurtband und einem Zustand mit vollständig abgewickeltem Gurtband weniger als eine Umdrehung ausführt.

Vorzugsweise ist dabei vorgesehen, dass die Steuerscheibe mit dem zweiten Zahnrad gekoppelt ist und das erste Zahnrad in einem Hohlrad kämmt, das rahmenfest angeordnet ist. Auf diese Weise ergibt sich ein sehr kompakter Aufbau.

Vorzugsweise ist das Planetenrad mit einem Schaltelement versehen, das einen Kindersicherungsmechanismus steuern kann. Auch zum Schalten des Kindersicherungsmechanismus kann in vorteilhafter Weise das Planetengetriebe genutzt werden, genauer gesagt die Tatsache, dass bei geeigneter Zähnezahl die Ausrichtung des Schaltelements im Raum bei jedem Umlauf des Planetenrades sich ändert. Wenn die Ausgangsstellung des Planetenrades geeignet gewählt wird, kann gewährleistet werden, dass das Schaltelement den Kindersicherungsmechanismus erst dann schaltet, wenn das Gurtband fast vollständig von der Gurtspule abgezogen ist.

Der Kindersicherungsmechanismus weist vorzugsweise ein Sperrelement auf, das vom Schaltelement zwischen einer Ausgangsstellung und einer Sperrstellung verstellt werden kann. Hierdurch ergibt sich ein kompakter Aufbau, insbesondere wenn das Schaltelement das Sperrelement direkt betätigt.

Gemäß einer Ausführungsform der Erfindung ist vorgesehen, dass das Sperrelement mit einem Betätigungsarm versehen ist, der elastisch verstellbar ist. Mit der Elastizität des Betätigungsarms können zwei verschiedene Arten des Zusammenwirkens des Schaltelements mit dem Sperrelement erzielt werden, die sich hinsichtlich ihrer Wirkung in Abhängigkeit von der Bewegungsrichtung des Schaltelements unterscheiden. Wenn das Schaltelement in einer ersten Richtung auf den Betätigungsarm trifft, weicht dieser elastisch aus, sodass das Sperrelement nicht betätigt wird. Wenn das Schaltelement dagegen in der entgegengesetzten Richtung auf den Betätigungsarm trifft, kann dieser nicht ausweichen, sodass das Sperrelement in eine Sperrstellung geschaltet wird.

Gemäß einer bevorzugten Ausführungsform der Erfindung ist vorgesehen, dass die Steuerscheibe auf ihrem Außenumfang eine Steuerkontur aufweist. Mit der Steuerkontur kann in sehr kompakter Weise der Sensorruhigstellungsmechanismus geschaltet werden.

Vorzugsweise ist dabei vorgesehen, dass der Sensorruhigstellungsmechanismus einen Ruhigstellungshebel aufweist, der mittels der Steuerkontur zwischen einer aktivierten Stellung und einer Betriebsstellung verstellt werden kann. Der Ruhigstellungshebel kann in technisch sehr einfacher Weise von einer Feder gegen die Steuerkontur beaufschlagt werden, sodass er dieser folgt und in Abhängigkeit vom Außenumfang der Steuerscheibe den Sensorruhigstellungsmechanismus geeignet schaltet.

Gemäß einem eigenständigen Aspekt der Erfindung ist auch ein Stufenzahnrad für ein Planetengetriebe eines Gurtaufrollers der vorstehend genannten Art vorgesehen, wobei das Stufenzahnrad ein erstes Zahnrad und ein zweites Zahnrad aufweist und sich die Anzahl der Zähne der beiden Zahnräder voneinander unterscheidet. Mit diesem Stufenzahnrad kann die Drehung der Steuerscheibe sehr stark gegenüber der Drehung der Gurtspule untersetzt werden.

Das Stufenzahnrad ist vorzugsweise mit einem Schaltelement versehen, das exzentrisch zur Rotationsachse des Stufenzahnrades angeordnet ist. Das Schaltelement kann dazu verwendet werden, einen Kindersicherungsmechanismus zu schalten.

Vorzugsweise ist das Schaltelement dabei zwischen dem ersten und dem zweiten Zahnrad angeordnet. Hierdurch ist ein sehr kompakter Aufbau möglich.

Die Erfindung wird nachfolgend anhand zweier Ausführungsformen beschrieben, die in den beigefügten Zeichnungen dargestellt sind. In diesen zeigen:
- Figur 1 schematisch einen erfindungsgemäßen Gurtaufroller;
- Figur 2 ein Detail des Kindersicherungsmechanismus in einem ersten Zustand während des Gurtbandauszugs;
- Figur 3 ein Detail des Kindersicherungsmechanismus in einem zweiten Zustand während des Gurtbandauszugs;
- Figur 4 ein Detail des Kindersicherungsmechanismus in einem ersten Zustand während des Gurtbandeinzugs;
- Figur 5 ein Detail des Kindersicherungsmechanismus in einem zweiten Zustand während des Gurtbandeinzugs;
- Figur 6 ein Detail des Kindersicherungsmechanismus in einem dritten Zustand während des Gurtbandeinzugs;
- Figur 7 ein Detail des Kindersicherungsmechanismus eines Gurtaufrollers gemäß einer alternativen Ausführungsform während des Gurtbandauszugs;
- Figur 8 einen Querschnitt durch das beim Gurtaufroller von Figur 1 verwendete Planetengetriebe;
- Figur 9 einen Schnitt entlang der Ebene E von Figur 8;
- Figur 10 eine Ansicht entsprechend derjenigen von Figur 9, wobei sich das Planetengetriebe in einem zweiten Zustand befindet.

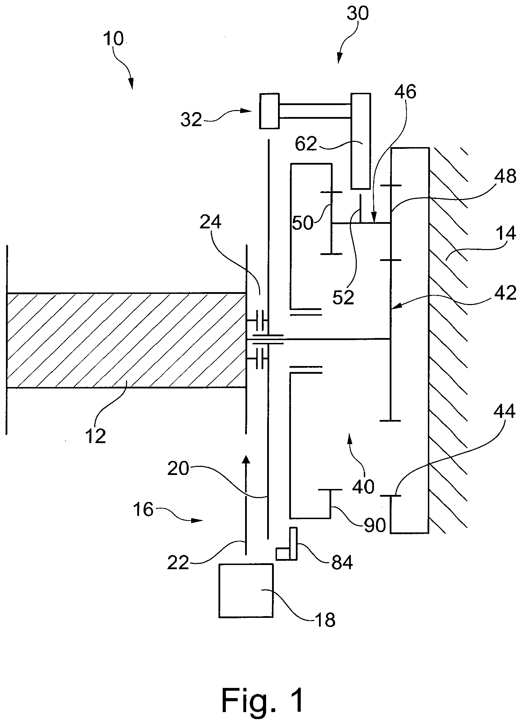

In Figur 1 ist schematisch ein Gurtaufroller 10 gezeigt, der eine Gurtspule 12 aufweist. Auf der Gurtspule ist ein (hier nicht dargestellter) Fahrzeug-Sicherheitsgurt aufgenommen. Die Gurtspule ist drehbar in einem hier schematisch angedeuteten Rahmen 14 gelagert, sodass das Gurtband des Sicherheitsgurts von der Gurtspule 12 abgezogen bzw. wieder auf dieser aufgenommen werden kann.

Um die Gurtspule im Bedarfsfall (beispielsweise bei einer sehr starken Bremsung oder einem Unfall) blockieren zu können, ist ein hier schematisch dargestellter Blockiermechanismus 16 vorgesehen, der u. a. einen Sensor 18, eine Sperrscheibe 20 und ein Blockierelement 22 aufweist.

Das Blockierelement dient dazu, die Gurtspule 12 drehfest relativ zum Rahmen 14 abzustützen, sodass sie (jedenfalls bis zu einem von einem Kraftbegrenzer vorgegebenen Grenzdrehmoment) drehfest gehalten ist.

Die Sperrscheibe 20 dient zur Aktivierung des Blockiermechanismus 16. Sie ist über einen hier schematisch gezeigten Mitnahmemechanismus 24 mit der Gurtspule 12 gekoppelt.

Das Blockierelement 22 kann auf zwei unterschiedliche Arten aktiviert werden, nämlich gurtbandsensitiv und fahrzeugsensitiv. Ein Beispiel für eine gurtbandsensitive Aktivierung ist ein abrupter Gurtbandabzug, wie er beispielsweise bei einer schnellen Vorverlagerung eines Fahrzeuginsassen auftritt. Ein Beispiel für eine fahrzeugsensitive Aktivierung ist eine abrupte Bremsung des Fahrzeugs. Beide Arten der Aktivierung beruhen darauf, dass eine Relativdrehung zwischen der Sperrscheibe 20 und der Gurtspule auftritt oder hervorgerufen wird.

Wenn die Gurtspule 12 sich dreht und geringe Drehbeschleunigungen wirken, dreht sich die Sperrscheibe 20 zusammen mit der Gurtspule 12. Wenn aufgrund der Drehbeschleunigung der Gurtspule 12 (beispielsweise bei abruptem Gurtbandabzug) und der Massenträgheit der Sperrscheibe 20 ein Drehmoment zwischen der Gurtspule 12 und der Sperrscheibe 20 wirkt, das größer ist als das von der Mitnahmemechanismus 24 definierte Mitnahmedrehmoment, kommt es zu einer Relativdrehung zwischen der Sperrscheibe 20 und der Gurtspule 12. Diese Relativdrehung führt dazu, dass das Blockierelement 22 gurtbandsensitiv aktiviert wird.

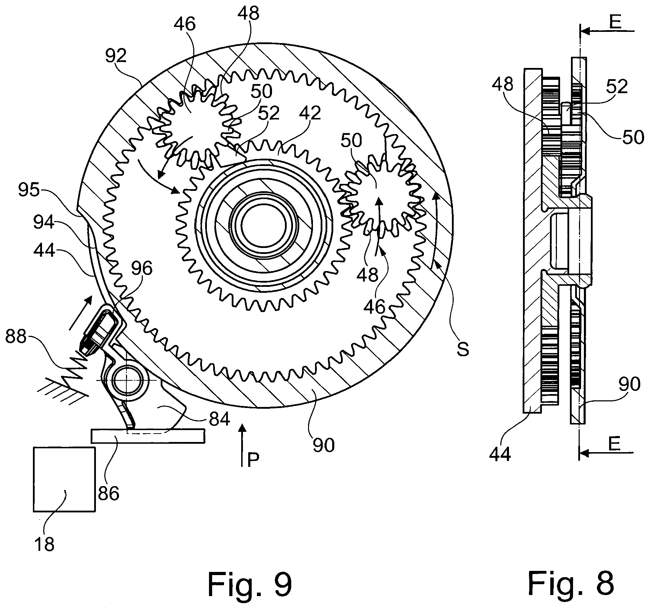

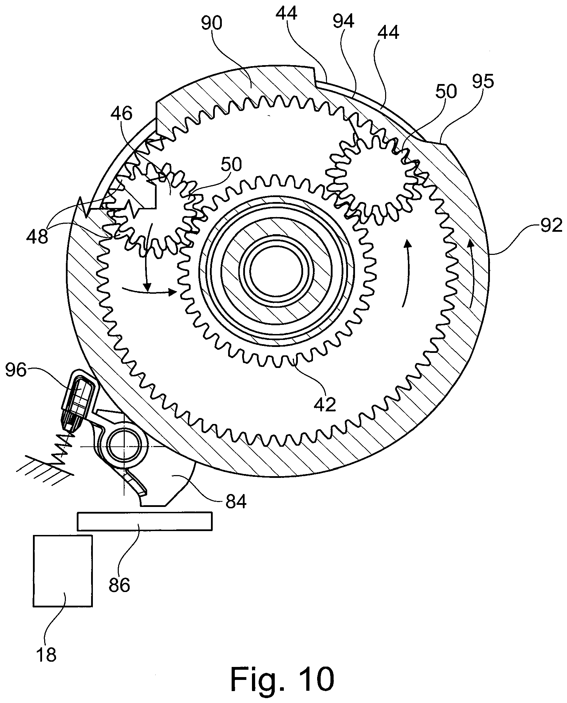

Der Sensor 18 dient zur fahrzeugsensitiven Aktivierung des Blockiermechanismus, also zur Aktivierung, wenn auf das Fahrzeug Beschleunigungen oder Verzögerungen einwirken, die größer als ein vorbestimmter Schwellwert sind. In diesem Fall spricht der Sensor 18 an (beispielsweise gebildet durch ein Trägheitselement und eine von diesem verstellbare Sperrklinke 86, die in den Figuren 9 und 10 zu sehen ist), sodass die Sperrscheibe 20 in Gurtbandabzugsrichtung blockiert wird. Wird dann Gurtband von der Gurtspule 12 abgezogen, wird in gleicher Weise wie bei einer gurtbandsensitiven Aktivierung des Blockiermechanismus 16 das Blockierelement 22 aktiviert.

Der Gurtaufroller 10 ist weiterhin mit einem sogenannten Kindersicherungsmechanismus 30 versehen, mit dem der Gurtaufroller 10 in einen Betriebszustand umgeschaltet werden kann, in dem Gurtband zwar auf die Gurtspule 12 aufgewickelt werden kann, jedoch nicht mehr von dieser abgezogen werden kann. Hierdurch können ein Kindersitz oder auch zu transportierende Lasten an einem Fahrzeugsitz fixiert werden.

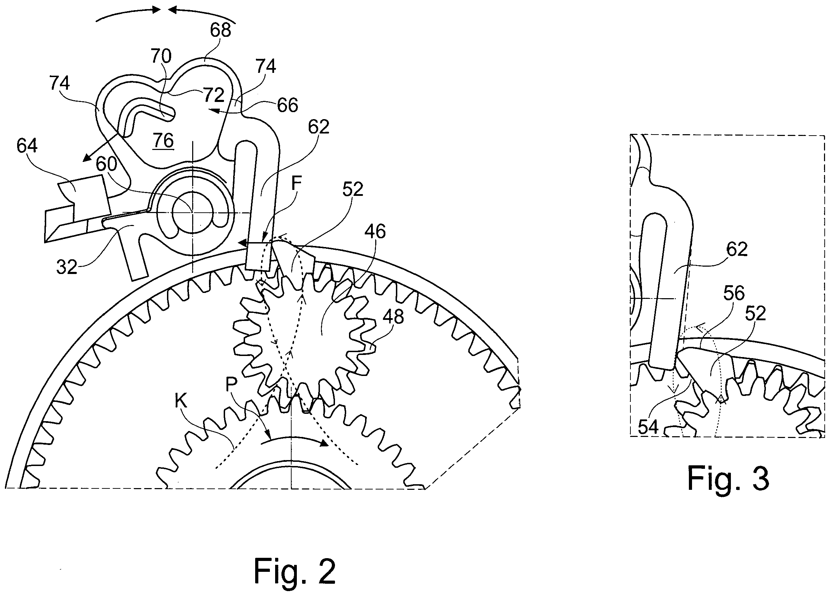

Der Kindersicherungsmechanismus 30 funktioniert allgemein ausgedrückt dadurch, dass ein Sperrelement 32 (siehe auch die Figuren 2 bis 6) vorgesehen ist, das bei aktiviertem Kindersicherungsmechanismus mit der Sperrscheibe 20 nach Art einer Ratsche zusammenwirkt. Wenn die Gurtspule sich in der Gurtbandeinzugsrichtung dreht, also Gurtband aufgewickelt wird, rutscht die Sperrscheibe 20 unter dem Sperrelement 32 durch; die Gurtspule 12 kann das Gurtband ungehindert aufwickeln. Wird dagegen Gurtband abgezogen, blockiert das Sperrelement 32 die Sperrscheibe 20, so dass es zu einer Relativdrehung zwischen der Gurtspule und der Sperrscheibe 20 kommt. Hierdurch spricht der Blockiermechanismus 16 in gleicher Weise wie bei einer gurtband- oder fahrzeugsensitiven Blockierung an. Es kann daher kein weiteres Gurtband abgewickelt werden.

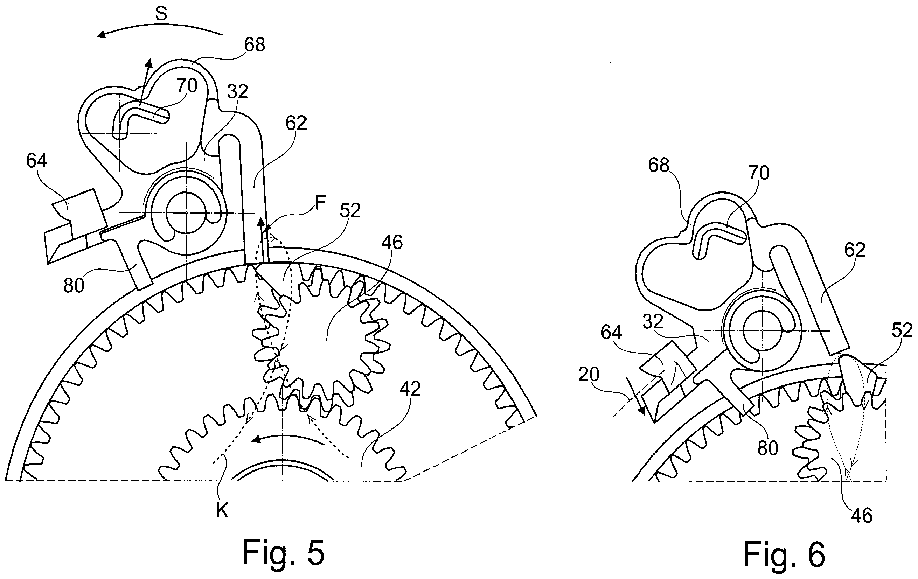

Das Sperrelement 32 wird zwischen einer Ausgangsstellung (siehe die Figuren 2 bis 4) und einer Sperrstellung (siehe Figur 6) mittels eines Getriebes geschaltet, das hier als Planetengetriebe 40 ausgebildet ist.

Es weist ein Sonnenrad 42 auf, das drehfest mit der Gurtspule 12 verbunden ist, ein Hohlrad 44, das hier rahmenfest angeordnet ist, sowie mindestens ein Planetenrad 46, das zwischen den Verzahnungen des Sonnenrades 42 und des Hohlrades 44 umläuft.

Das Planetenrad 46 ist hier als Stufenzahnrad mit einem ersten Zahnrad 48 und einem zweiten Zahnrad 50 ausgebildet. Diese haben unterschiedliche Durchmesser, wobei die Funktion des zweiten Zahnrades 50 später erläutert wird.

Drehfest am Planetenrad 46 ist ein Schaltelement 52 angebracht, das ähnlich wie ein Nocken oder Zahn exzentrisch nach außen vorsteht.

Wie insbesondere in den Figuren 2 und 3 zu sehen ist, ist das Schaltelement 52 in einer Seitenansicht durch zwei schräg zueinander angeordnete Flächen 54, 56 definiert, wobei die Fläche 54 etwa radial bezüglich der Drehachse des Planetenrades 46 ausgerichtet ist und die Fläche 56 mit der Fläche 54 einen Innenwinkel in der Größenordnung von 45 bis 60° einschließt.

Das Sperrelement 32 (siehe insbesondere Figur 2) ist schwenkbar auf einer rahmenfest angeordneten Schwenkachse 60 angeordnet. Es weist einen Betätigungsarm 62 auf, der mit dem Schaltelement 52 zusammenwirken kann. Weiterhin ist ein Sperrzahn 64 vorgesehen, der mit einer Verzahnung am Außenumfang der Sperrscheibe 20 zusammenwirken kann.

Das Sperrelement 32 ist mit einem bistabilen Kippmechanismus 66 versehen, der ein Federelement 68 und ein fahrzeugfest angebrachtes Widerlager 70 aufweist. Das Federelement 68 weist zwei Arme auf, die sich seitlich eines Scheitelpunktes 72 erstrecken. Die vom Scheitelpunkt 72 abgewandten Enden des Federelements 68 sind einstückig mit Körperabschnitten 74 des Sperrelements 32 ausgeführt, die zusammen mit dem Federelement 68 eine im weitesten Sinne herzförmige Aussparung 76 umschließen. Innerhalb dieser Aussparung 76 ist auch das Widerlager 70 angeordnet.

Der Betätigungsarm 62 ist einstückig mit einem der Körperabschnitte 74 ausgeführt.

Der Betätigungsarm 62 erstreckt sich in den Bewegungsraum des Schaltelements 52 hinein, sodass das Schaltelement 52, wenn das Planetenrad 46 im Hohlrad 44 umläuft, auf den Betätigungsarm 62 treffen kann.

Wenn das Gurtband von der Gurtspule 12 vollständig abgezogen wird, führt die Gurtspule 12 mehrere Umdrehungen aus. Dabei läuft das Planetenrad 46 mehrere Male im Hohlrad 44 um und kommt entsprechend auch mehrere Male am Sperrelement 32 vorbei. Durch geeignete Positionierung des Planetenrades 46 innerhalb des Hohlrades 44 und durch geeignete Auswahl der Anzahl der Zähne des Sonnenrades 42, des Zahnrades 48 und des Hohlrades 44 ist gewährleistet, dass das Schaltelement 52 nur bei der "letzten" Vorbeibewegung mit dem Betätigungsarm 62 zusammenwirkt, also wenn bereits fast das gesamte Gurtband von der Gurtspule 12 abgezogen ist. Bei allen anderen Vorbeibewegungen befindet sich das Planetenrad 46 in einer solchen Position, dass das Schaltelement 52 unter dem Betätigungsarm 62 hindurchtaucht.

In den Figuren 2 und 3 ist das Zusammenwirken des Schaltelements 52 mit dem Betätigungsarm 62 bei der letzten Vorbeibewegung zu sehen. Das Sonnenrad 42 dreht sich beim Abwickeln des Gurtbandes in der Richtung des Pfeils P, und die Spitze des Schaltelements 52 bewegt sich auf der Kurve K. Das Schaltelement 52 trifft dabei in (bezogen auf das Hohlrad) annähernd tangentialer Richtung auf den Betätigungsarm 62 und übt auf diesen eine Kraft F aus. Dadurch wird der Betätigungsarm 62 elastisch verformt (siehe den in Figur 3 gezeigten Zustand im Vergleich zum strichpunktierten Ausgangszustand), während das Sperrelement 32 sich mit der Innenseite der Aussparung 76 am Widerlager 70 abstützt. Das Sperrelement 32 verbleibt also in der in Figur 2 gezeigten Ausgangsstellung, bis das Schaltelement 52 den Kontakt mit dem Betätigungsarm 62 verliert.

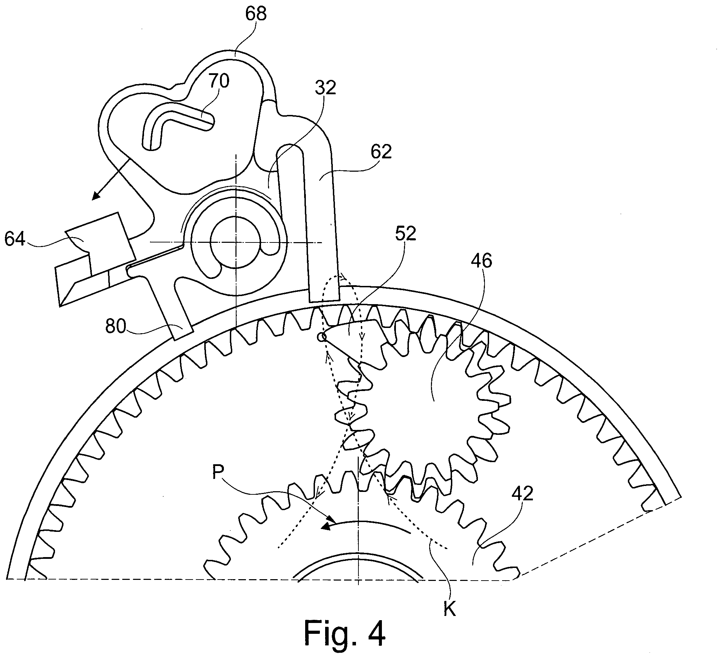

In den Figuren 4 bis 6 ist das Zusammenwirken des Schaltelements 52 mit dem Betätigungsarm 62 gezeigt, wenn sich die Gurtspule in entgegengesetzter Richtung dreht, also in der Aufwickelrichtung. Das Schaltelement 52 nähert sich dann entlang der Kurve K von der radial innen liegenden Seite an den Betätigungsarm 62 an (siehe Figur 4) und trifft auf dessen nach innen gerichtete Stirnseite (siehe Figur 5). Hierdurch wird das Sperrelement 32 in der Richtung des Pfeils S ausgehend von der Ausgangsstellung zunächst in einen Zustand verstellt, in dem der Scheitelpunkt 72 des Federelements 68 am Widerlager 70 anliegt (siehe Figur 5) und schließlich in die Sperrstellung verstellt (siehe Figur 6), in der der Scheitelpunkt 72 über das Widerlager 70 hinweggerutscht ist und der Sperrzahn 64 so weit radial einwärts verschwenkt ist, dass er mit dem Außenumfang des hier schematisch angedeuteten Sperrrades 20 zusammenwirkt.

In der Sperrstellung des Sperrelements 32 ist der Kindersicherungsmechanismus aktiviert, und es kann Gurtband lediglich abgezogen werden.

Wenn das Gurtband wieder (nahezu) vollständig auf der Gurtspule aufgenommen ist, trifft das Schaltelement 52 auf einen Lösevorsprung 80 am Sperrelement 32, wodurch dieses wieder zurück in die Ausgangsstellung verstellt wird.

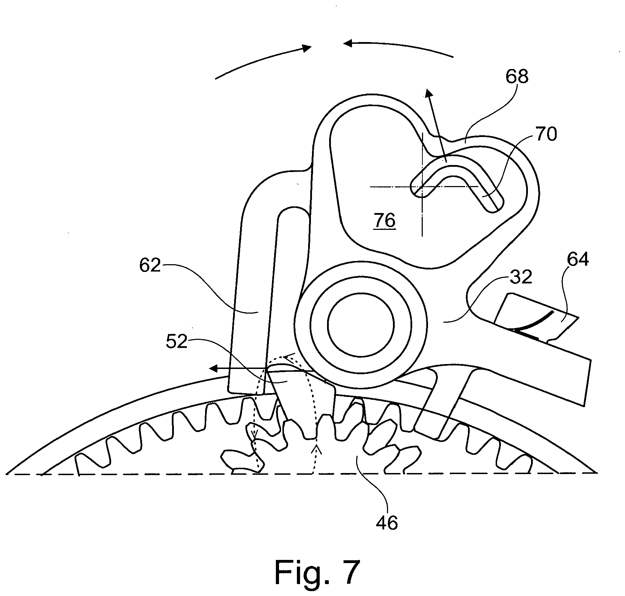

In Figur 7 ist eine alternative Ausführungsform gezeigt, bei der die Anordnung des Sperrelements 32 spiegelverkehrt gegenüber der in den Figuren 2 bis 6 gezeigten Ausführungsform ist. Dies führt dazu, dass die Reaktionskraft, die beim Abwickeln des Gurtbandes vom Schaltelement 52 auf den Betätigungsarm 62 ausgeübt wird, durch Anlage des Federelements 68 am Widerlager 70 (und nicht durch Anlage des Widerlagers 70 am Rand der Aussparung 76) aufgebracht werden muss. Abgesehen hiervon ist die Funktionsweise dieselbe wie bei der ersten Ausführungsform.

In den Gurtaufroller 10 ist weiterhin eine sogenannte Sensorruhigstellung implementiert, die gewährleistet, dass bei nahezu vollständig aufgewickeltem Gurtband der Sensor 18 nicht ansprechen kann. Hierdurch kann verhindert werden, dass der Blockiermechanismus des Gurtaufrollers unbeabsichtigt in Betriebszuständen anspricht, bei denen kein Fahrzeuginsasse angeschnallt ist.

Die Sensorruhigstellung funktioniert verallgemeinert ausgedrückt so, dass bei fast vollständig aufgewickeltem Gurtband ein Ruhigstellungshebel 84 so verstellt wird, dass die Sperrklinke 86 des Sensors 18 in einer Position gehalten wird, in der sie nicht an der Sperrscheibe 20 angreifen kann.

Der Ruhigstellungshebel 84 ist in den Figuren 9 und 10 zu sehen. Er kann verstellt werden zwischen einer aktivierten Stellung (siehe Figur 9), in der er mit einer hier schematisch gezeigten Sperrklinke 86 so zusammenwirkt, dass diese nicht in der Richtung des Pfeils P von Figur 9 nach oben verstellt werden kann, und einer Betriebsstellung (siehe Figur 10), in welcher die Sperrklinke 86 freigegeben ist.

Auf den Ruhigstellungshebel 84 wirkt eine Feder 88 ein, die den Ruhigstellungshebel in die aktivierte Stellung beaufschlagt. Aus dieser kann der Ruhigstellungshebel 84 mittels einer Steuerscheibe 90 verstellt werden.

Die Steuerscheibe 90 ist mit einer Innenverzahnung versehen, in die das zweite Zahnrad 50 des Planetenrades 46 eingreift. Aufgrund der geringfügig unterschiedlichen Zähnezahlen der Zahnräder 48, 50 ist die Drehung der Steuerscheibe 90 relativ zur Drehung des Sonnenrades 42 stark untersetzt, sodass die Steuerscheibe 90 etwas weniger als eine Umdrehung ausführt, wenn das gesamte Gurtband von der Gurtspule 12 abgewickelt wird (oder umgekehrt auch wieder aufgewickelt wird).

Die Steuerscheibe 90 ist mit einer Steuerkurve versehen, die aus zwei Abschnitten besteht. Ein erster Abschnitt 92 ist gebildet durch den Außenumfang der Steuerscheibe 90; dieser erstreckt sich über fast den gesamten Außenumfang, beispielsweise über einen Winkelbereich von etwa 330°. Ein zweiter Abschnitt 94 hat einen geringeren Durchmesser als der erste Abschnitt 92; der Abschnitt 94 kann also als Vertiefung angesehen werden.

Der Ruhigstellungshebel 84 hat einen Gleitkopf 96, der mit der Außenkontur der Steuerscheibe 90 zusammenwirkt. Die Feder 88 gewährleistet dabei, dass der Gleitkopf 96 immer an der Außenkontur der Steuerscheibe 90 anliegt.

In der Ausgangsstellung (also bei vollständig aufgewickeltem Gurtband) befindet sich der Gleitkopf 96 im zweiten Abschnitt 94, sodass sich der Ruhigstellungshebel 84 in der aktivierten Position befindet (siehe Figur 9). Wenn das Gurtband von der Gurtspule 12 abgezogen wird, dreht sich die Steuerscheibe 90 in der Richtung des Pfeils S von Figur 9, sodass nach einer vorbestimmten Anzahl von Umdrehungen der Gurtspule 12 der Gleitkopf 96 über eine Übergangskontur 95 auf den ersten Abschnitt 92 geführt wird. Dadurch wird der Ruhigstellungshebel 84 in die Betriebsposition (siehe Figur 10) verschwenkt, sodass der Sensor 18 uneingeschränkt ansprechen kann.

## Patentansprüche

1. Gurtaufroller (10) für einen Fahrzeug-Sicherheitsgurt, mit einem Rahmen (14), einer Gurtspule (12), die drehbar im Rahmen (14) gelagert ist, einem Blockiermechanismus (16), der zumindest gurtbandsensitiv ansprechen kann und eine Sperrscheibe (20) aufweist, und einem Kindersicherungsmechanismus, der von einem Planetengetriebe (40) gesteuert wird, **dadurch gekennzeichnet, dass** ein Sensorruhigstellungsmechanismus (84, 88, 90) vorgesehen ist, der ebenfalls vom Planetengetriebe (40) gesteuert wird.

2. Gurtaufroller nach Anspruch 1, **dadurch gekennzeichnet, dass** der Sensorruhigstellungsmechanismus eine Steuerscheibe (90) aufweist, die über das Planetengetriebe (40) mit der Gurtspule (12) gekoppelt ist.

3. Gurtaufroller nach Anspruch 2, **dadurch gekennzeichnet, dass** das Planetengetriebe (40) mindestens ein Planetenrad (46) aufweist, mit dem die Steuerscheibe (90) gekoppelt ist.

4. Gurtaufroller nach Anspruch 3, **dadurch gekennzeichnet, dass** das Planetenrad (46) ein Stufenrad mit einem ersten Zahnrad (48) und einem zweiten Zahnrad (50) ist, wobei sich die Anzahl der Zähne der beiden Zahnräder voneinander unterscheidet.

5. Gurtaufroller nach Anspruch 4, **dadurch gekennzeichnet, dass** die Steuerscheibe (90) mit dem zweiten Zahnrad (50) gekoppelt ist und das erste Zahnrad (48) in einem Hohlrad (44) kämmt, das rahmenfest angeordnet ist.

6. Gurtaufroller nach einem der Ansprüche 3 bis 5, **dadurch gekennzeichnet, dass** das Planetenrad (46) mit einem Schaltelement (52) versehen ist, das einen Kindersicherungsmechanismus steuern kann.

7. Gurtaufroller nach Anspruch 6, **dadurch gekennzeichnet, dass** der Kindersicherungsmechanismus ein Sperrelement (32) aufweist, das vom Schaltelement (30) zwischen einer Ausgangsstellung und einer Sperrstellung verstellt werden kann.

8. Gurtaufroller nach Anspruch 7, **dadurch gekennzeichnet, dass** das Sperrelement (32) mit einem Betätigungsarm (62) versehen ist, der elastisch verstellbar ist.

9. Gurtaufroller nach einem der Ansprüche 2 bis 8, **dadurch gekennzeichnet, dass** die Steuerscheibe auf (90) ihrem Außenumfang eine Steuerkontur (92, 94, 95) aufweist.

10. Gurtaufroller nach Anspruch 9, **dadurch gekennzeichnet, dass** der Sensorruhigstellungsmechanismus einen Ruhigstellungshebel (84) aufweist, der mittels der Steuerkontur (92, 94, 95) zwischen einer aktivierten Stellung und einer Betriebsstellung verstellt werden kann.

11. Gurtaufroller nach einem der vorhergehenden Ansprüche, mit einem Stufenzahnrad (46), mit einem ersten Zahnrad (48) und einem zweiten Zahnrad (50), wobei sich die Anzahl der Zähne der beiden Zahnräder voneinander unterscheidet.

12. Gurtaufroller nach Anspruch 11, **dadurch gekennzeichnet, dass** ein Schaltelement (52) vorgesehen ist, das exzentrisch zur Rotationsachse des Stufenzahnrades (46) angeordnet ist.

13. Gurtaufroller nach Anspruch 12, dass das Schaltelement (52) zwischen dem ersten und dem zweiten Zahnrad (48, 50) angeordnet ist.

## Claims

1. A belt retractor (10) for a vehicle seat belt, comprising a frame (14), a belt reel (12) which is rotatably supported within the frame (14), a blocking mechanism (16) adapted to react at least sensitive to webbing and including a locking disk (20), and a child-proof locking mechanism controlled by a planetary gearing (40), **characterized in that** a sensor tranquilizing mechanism (84, 88, 90) which is equally controlled by the planetary gearing (40) is provided.

2. The belt retractor according to claim 1, **characterized in that** the sensor tranquilizing mechanism includes a control disk (90) being coupled to the belt reel (12) via the planetary gearing (40).

3. The belt retractor according to claim 2, **characterized in that** the planetary gearing (40) includes at least one planet wheel (46) to which the control disk (90) is coupled.

4. The belt retractor according to claim 3, **characterized in that** the planet wheel (46) is a step wheel comprising a first gearwheel (48) and a second gearwheel (50), the number of teeth of the two gearwheels being different from each other.

5. The belt retractor according to claim 4, **characterized in that** the control disk (90) is coupled to the second gearwheel (50) and the first gearwheel (48) meshes in a ring gear (44) which is arranged to be fixed to the frame.

6. The belt retractor according to any one of the claims 3 to 5, **characterized in that** the planet wheel (46) is provided with a switching member (52) adapted to control a child-proof locking mechanism.

7. The belt retractor according to claim 6, **characterized in that** the child-proof locking mechanism includes a locking member (32) adapted to be adjusted by the switching member (30) between a home position and a locking position.

8. The belt retractor according to claim 7, **characterized in that** the locking member (32) is provided with an actuating arm (62) which is resiliently adjustable.

9. The belt retractor according to any one of the claims 2 to 8, **characterized in that** the control disk (90) includes a control contour (92, 94, 95) on its outer periphery.

10. The belt retractor according to claim 9, **characterized in that** the sensor tranquilizing mechanism includes a tranquilizing lever (84) which is adapted to be adjusted by means of the control contour (92, 94, 95) between an activated position and an operating position.

11. The belt retractor according to any one of the preceding claims, comprising a step gearwheel (46) including a first gearwheel (48) and a second gearwheel (50), with the number of teeth of the two gearwheels being different from each other.

12. The belt retractor according to claim 11, **characterized in that** a switching member (52) which is off-centered from the axis of rotation of the step gearwheel (46) is provided.

13. The belt retractor according to claim 12, **characterized in that** the switching element (52) is arranged between the first gearwheel and the second gearwheel (48, 50).

## Revendications

1. Enrouleur de ceinture (10) pour une ceinture de sécurité de véhicule, comprenant un cadre (14), une bobine de ceinture (12) qui est montée libre en rotation dans le châssis (14), un mécanisme de blocage (16) qui est au moins sensible à la sangle de la ceinture et qui possède un disque de verrouillage (20), et un mécanisme de verrouillage pour enfant qui est commandé par un engrenage planétaire (40), **caractérisé en ce qu'**il est prévu un mécanisme capteur d'immobilisation (84, 88, 90), qui est également commandé par l'engrenage planétaire (40).

2. Enrouleur de ceinture de sécurité selon la revendication 1, **caractérisé en ce que** le mécanisme de capteur d'immobilisation de capteur comprend un disque de commande (90) qui est couplé par l'intermédiaire de l'engrenage planétaire (40) à la bobine de ceinture (12).

3. Enrouleur de ceinture selon la revendication 2, **caractérisé en ce que** l'engrenage planétaire (40) présente au moins un engrenage planétaire (46) avec lequel le disque de commande (90) est couplé.

4. Enrouleur de ceinture selon la revendication 3, **caractérisé en ce que** l'engrenage planétaire (46) comporte une roue étagée avec une première roue dentée (48) et une seconde roue dentée (50), dans lequel les nombres de dents des deux roues dentées sont différents l'un de l'autre.

5. Enrouleur de ceinture selon la revendication 4, **caractérisé en ce que** le disque de commande (90) est couplé avec la seconde roue dentée (50) et que la première roue dentée (48) s'engrène dans une couronne dentée (44), qui est disposée fixe sur le châssis.

6. Enrouleur de ceinture selon l'une quelconque des revendications 3 à 5, **caractérisé en ce que** l'engrenage planétaire (46) est prévu avec un élément de commutation (52) qui peut commander un mécanisme de sécurité pour enfant.

7. Enrouleur de ceinture selon la revendication 6, **caractérisé en ce que** le mécanisme de verrouillage enfant comprend un élément de verrouillage (32), pour lequel l'élément de commutation (30) peut être réglé entre une position initiale et un emplacement de verrouillage

8. Enrouleur de ceinture selon la revendication 7, **caractérisé en ce que** l'élément de blocage (32) est prévu avec un bras d'actionnement (62), lequel est élastiquement réglable.

9. Enrouleur de ceinture selon l'une des revendications 2 à 8, **caractérisé en ce que** le disque de commande (90) présente sur sa périphérie extérieure un contour de commande (92, 94, 95).

10. Enrouleur de ceinture selon la revendication 9, **caractérisé en ce que** le mécanisme capteur d'immobilisation comprend un levier de retenue (84), qui au moyen du contour de commande (92, 94, 95) peut être ajusté entre une position activée et une position de fonctionnement.

11. Enrouleur de ceinture selon l'une quelconque des revendications précédentes, avec une première roue étagée (46), avec une première roue dentée (48) et une deuxième roue dentée (50), pour lequel les nombres de dents des deux roues dentées sont différents l'un de l'autre.

12. Enrouleur de ceinture selon la revendication 11, **caractérisé en ce qu'**un élément de commutation (52) est prévu, et qui est agencé de manière excentrique à l'axe de rotation de la roue dentée étagée (46).

13. Enrouleur de ceinture selon la revendication 12, **caractérisé en ce que** l'élément de commutation (52) est disposé entre la première et la seconde roue dentée (48, 50).
